# EUROPEAN PATENT APPLICATION

(11) **EP 4 815 380 A1**
(43) Date of publication of application: **30.09.2026**
(21) Application number: 26154283.1
(22) Date of filing: 27.01.2026
(51) Int. Cl.: H04L 12/46, H04L 49/60, H04L 45/58

(54) **HANDLING OF CONTROL PLANE TRAFFIC ON REMOTE NETWORK DEVICE INTERFACES**

(30) Priority: 28.03.2025 US 202519094581
(71) Applicant: Arista Networks, Inc., Santa Clara, CA 95054 (US)
(72) Inventor: Grewal, Avininderpal Singh, Santa Clara, CA 95054 (US); Jagjitkumar, Karankumar, Santa Clara, CA 95054 (US); Bailey, Scott William Hill, Santa Clara, CA 95054 (US); Jehangir, Abdul Haseeb, Santa Clara, CA 95054 (US)
(74) Representative: Hoffmann Eitle

(57) **Abstract**

A first network device in a network device aggregation group may be configured to execute control plane process(es) for performing control plane processing of group-ingress control plane traffic and/or for generating control plane traffic for group-egress. Other network device(s) in the network device aggregation group may be configured to convey group-ingress control plane traffic, received at local group-external facing interface(s), for processing at the control plane process(es) executing on the first network device. The other network device(s) may also be configured to receive group-egress control plane traffic, from the first network device, for transmission at local group-external facing interface(s).

## Description

This application claims priority to U.S. patent application No. 19/094,581, filed March 28, 2025, which is hereby incorporated by reference herein in its entirety.

### Background

A communication system can include network devices that are interconnected to form a network for conveying network traffic from source devices to destination devices.

In some network implementations, some network devices can be stackable network switches. A set of stackable network switches can be configured to operate as if it were a single device (e.g., from the perspective of an entity outside of the network switch stack, from the management perspective, with ports of the individual switches operating as ports of the single device, etc.).

### Brief Description of the Drawings

FIG. 1 is a diagram of an illustrative networking system that includes network devices in a network device aggregation group in accordance with some embodiments.
FIG. 2 is a diagram of an illustrative network device in accordance with some embodiments.
FIG. 3 is a diagram of illustrative aggregation group-external control plane traffic in accordance with some embodiments.
FIG. 4 is a diagram of an illustrative worker network device configured to process aggregation group-ingress control plane traffic in accordance with some embodiments.
FIGS. 5A and 5B are diagrams of modified versions of aggregation group-ingress control plane traffic in accordance with some embodiments.
FIG. 6 is a diagram of illustrative aggregation group-ingress control plane traffic for tunneling containing traffic class information in accordance with some embodiments.
FIG. 7 is a diagram of an illustrative supervisor network device configured to process aggregation group-ingress control plane traffic tunneled from a worker network device in accordance with some embodiments.
FIG. 8 is a diagram of a modified version of aggregation group-ingress control plane traffic obtained by a supervisor packet processor in accordance with some embodiments.
FIG. 9 is a diagram of an illustrative supervisor network device configured to provide aggregation group-egress control plane traffic in accordance with some embodiments.
FIG. 10 is a diagram of a modified version of aggregation group-egress control plane traffic in accordance with some embodiments.
FIG. 11 is a diagram of an illustrative worker network device configured to process aggregation group-egress control plane traffic tunneled from a supervisor network device in accordance with some embodiments.
FIG. 12 is a flowchart of illustrative operations for processing group-ingress control plane traffic received via a remote device interface in accordance with some embodiments.
FIG. 13 is a flowchart of illustrative operations for processing group-egress control plane traffic transmitted via a remote device interface in accordance with some embodiments.

### Detailed Description

A network may include numerous interconnected network devices that process network traffic in a desired manner. In some illustrative applications (e.g., device stacking), a set of network devices may be configured to operate as a collective unit (e.g., a network device aggregation group). These network devices may be configured to handle various types of traffic such as data plane traffic within the set of network devices, internal control plane traffic (e.g., for controlling the operations of the network devices as the collective unit), external control plane traffic (e.g., exchanged between the collective unit and external devices), etc. If care is not taken, some traffic may not be properly handled (e.g., external control plane traffic may not be exchanged and processed in a timely manner).

To mitigate these issues and/or impart other advantages, illustrative mechanisms for handling aggregation group-external ingress and/or egress control plane traffic conveyed (e.g., transmitted and/or received) via remote interface(s) of remote network device(s) different from a network device configured to perform control plane processing of the control plane traffic are described herein. In some illustrative configurations described herein as an example, the network device configured to perform control plane processing may be a supervisor of the network device aggregation group and the other (remote) network device(s) may be worker(s) of the network device aggregation group. The group-external ingress and/or egress control plane traffic may be exchanged between any network device of the network device aggregation group and an external device external to the network device aggregation group.

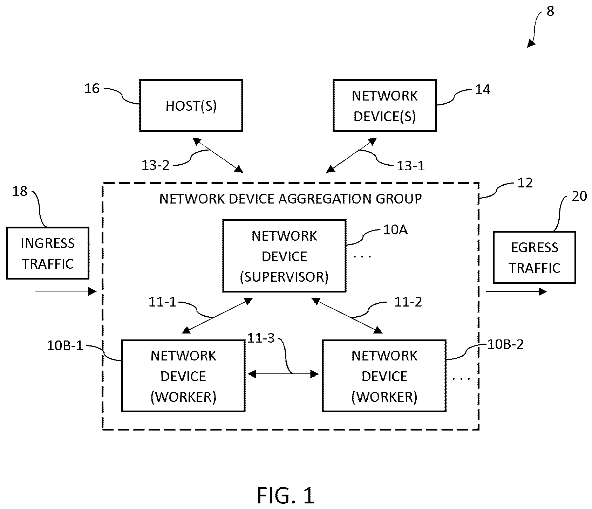

An illustrative network 8 having network devices (e.g., the network device configured to perform control plane processing and the remote device(s) as described above) is shown in FIG. 1. Network 8 may have any suitable scope. As examples, network 8 may include, be, and/or form part of one or more local segments, one or more local subnets, one or more local area networks (LANs), one or more virtual local area networks (VLANs), one or more campus area networks, one or more metropolitan area networks, one or more wide area networks, one or more datacenter networks, one or more cloud networks, etc. Network 8 may include a wired network (portion) based on wired technologies or standards such as Ethernet (e.g., using copper cables and/or fiber optic cables) and, if desired, may include wireless network portion(s) such as one or more wireless local area networks (WLANs) provided by wireless access point(s). If desired, network 8 may include internet service provider networks (e.g., the Internet) or other public service provider networks, private service provider networks (e.g., multiprotocol label switching (MPLS) networks), and/or other types of networks such as telecommunication service provider networks.

Network 8 may be implemented using and include network devices that handle (e.g., process by switching, routing, modifying, forwarding, etc.) network traffic to convey information for user applications between end hosts and/or for other applications, services, and functions generally between devices (e.g., network devices and/or end host devices). Network 8 may include networking equipment forming a variety of network devices that interconnect end hosts of network 8. As examples, network devices of network 8 may include one or more network switches (e.g., single-layer (Layer-2) switches, multi-layer (Layer-2 and Layer-3) switches, etc.), one or more bridges, one or more routers, one or more gateways, one or more hubs, one or more wireless access points, one or more repeaters, one or more firewalls, one or more devices serving other networking functions, one or more devices that include the functionality of two or more of these devices, and/or management equipment that manages and controls the operation of one or more of other network devices.

In some illustrative configuration sometimes described herein as an example, network 8 may include network devices 10 (e.g., network devices 10A, 10B-1, 10B-2, etc.) and network device(s) 14. Network devices 10 may be configured to form a network device aggregation group (e.g., implementing a network device stack for a network stacking application, implementing another type of single (logical) network device instance for other applications, etc.). In the example of FIG. 1, network device aggregation group 12 (sometimes referred to as a logical or virtual network device instance) may include one or more network devices 10A (e.g., a device 10A) configured (to serve) as a supervisor for group 12, and may include one or more network devices 10B (e.g., devices 10B-1 and 10B-2) each configured (to serve) as a worker for group 12. In some instances, aggregation group 12 may include an additional network device configured (to serve) as a standby supervisor, while the network device 10A shown in FIG. 1 is configured (to serve) as an active supervisor. In general, network devices 10 may be referred to as members of aggregation group 12.

Configured with different roles, different network devices 10 may perform operations corresponding to those roles. As just a few examples, an active supervisor network device 10A may be configured to locally perform control plane operations and/or other operations (e.g., management operations) that control the various functionalities of local data plane components (e.g., packet processors), the various functionalities of remote data plane components (e.g., packet processors) on corresponding remote network devices (e.g., worker network devices 10B), and the various functionalities associated with aggregation group 12 as a whole. In some illustrative configurations described herein, an active supervisor network device 10A may be configured to generate group-egress control plane traffic (e.g., data units) for members of aggregation group 12 to be transmitted to devices external to the network device aggregation group. In some illustrative configurations described herein, the active supervisor network device 10A may be configured to receive and perform control plane processing of group-ingress control plane traffic (e.g., data units) for members of aggregation group 12 received from devices external to the network device aggregation group.

These control plane data units may be transmitted, received, and/or processed to facilitate execution of control plane process(es) (sometimes referred to control plane agent(s)) on supervisor network device 10A. As examples, these control plane processes may include control plane protocol processes such as a border gateway protocol (BGP) process that transmits, processes, and/or receives (route) advertisements messages, interior gateway protocol (IGP) process(es), a spanning tree protocol (STP) process that transmits, processes, and/or receives bridging protocol data units, an address resolution protocol (ARP) process, an intermediate system to intermediate system (IS-IS) protocol process, and a protocol independent multicast (PIM) protocol process, and/or other control plane processes.

A standby supervisor network device may perform operations to facilitate the switchover of active supervisor operations originally performed by the active supervisor network device, when desired. A worker network device 10B may offload the majority of control plane and/or management operations to (active) supervisor network device 10A and perform minimal local control plane and/or management operations (e.g., certain operations that facilitate the performance of the control plane and/or management operations at active supervisor network device 10A). Accordingly, worker network device 10 may mainly perform data plane traffic processing operations using local data plane components.

Network devices 10 of aggregation group 12 may be communicatively coupled to one another using network device aggregation group fabric links 11 (sometimes referred to as fabric links 11). As shown in FIG. 1, fabric link(s) 11-1 may communicatively couple device 10A to device 10B-1, fabric link(s) 11-2 may communicatively couple device 10A to device 10B-2, and fabric link(s) 11-3 may communicatively couple device 10B-1 to device 10B-2.

Network devices 10 of aggregation group 12 may be communicatively coupled to devices external to aggregation group 12 using non-aggregation-group-fabric links 13 (sometimes referred to as non-fabric links 13). In particular, each aggregation group network device 10 (e.g., device 10A, device 10B-1, device 10B-2, etc.) may be communicatively coupled to one or more group-external network devices 14 via corresponding non-fabric link(s) 13-1 and/or may be communicatively coupled to one or more hosts 16 (e.g., implemented on host devices such as laptops, computers, or other client devices, servers, etc.) via corresponding non-fabric link(s) 13-2.

Aggregation group 12 may receive ingress traffic 18 at aggregation group exterior-facing (non-fabric) interface(s) of any network device 10 and/or may transmit egress traffic 20 at aggregation group exterior-facing (non-fabric) interface(s) of any network device 10. As examples, some of egress traffic 20 (e.g., data plane traffic) may be ingress traffic 18 as forwarded by device(s) 10, some ingress traffic 18 (e.g., group-ingress control plane traffic) may be destined for (processing within) aggregation group 12, and some egress traffic 20 (e.g., group-egress control plane traffic) may be originated from within (e.g., generated by) aggregation group 12. In general, fabric links 11 may be used to forward these types of traffic (and other types of traffic) between network devices 10. In some illustrative configurations sometimes described herein as an example, a port stacking tunneling protocol (sometimes referred to as a port extender tunneling protocol) may be used by devices 10 to more efficiently convey and process traffic within aggregation group 12 using fabric links 11.

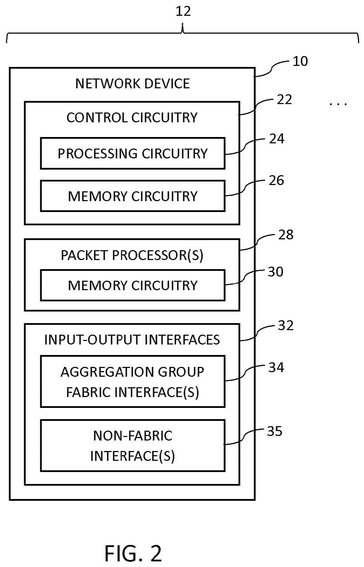

FIG. 2 is a diagram of an illustrative network device 10 in a network device aggregation group 12. For example, different instances of network device 10 shown in FIG. 2 may be used to implement respective network devices 10 in aggregation group 12 in FIG. 1, such as device 10A, device 10B-1, and device 10B-2. While the same functional components (e.g., processing circuitry, memory circuitry, packet processors, interfaces, etc., shown in FIG. 2) may be present in each network device 10 of aggregation group 12, the same type of functional component may be implemented differently (e.g., using different components having different processing capabilities, having different storage capacities, having different specifications, etc.) in different network devices 10 (e.g., in network devices 10 having different roles in aggregation group 12). If desired, some of the components shown in FIG. 2 may be omitted from one or more instances of network device 10.

As shown in FIG. 2, a network device 10 may include control circuitry 22 having processing circuitry 24 and memory circuitry 26, one or more packet processors 28 and corresponding packet processor memory circuitry 30, and input-output interfaces 32. In some illustrative configurations sometimes described herein as an example, network device 10 may be a fixed-configuration network device (e.g., a fixed-configuration network device having a fixed number of ports and/or a fixed hardware configuration). Accordingly, each network device 10 in aggregation group 12 may have a separate housing or enclosure for its components. If desired, network device 10 may be implemented in other manners (e.g., may be or form be part of a modular network device with removably coupled modules). If desired, network device 10 may be implemented using server equipment (e.g., containing some or all of the components shown in FIG. 2).

Processing circuitry 24 may include one or more processors such as central processing units (CPUs), graphics processing units (GPUs), microprocessors, general-purpose processors, host processors, microcontrollers, digital signal processors, programmable logic devices such as field programmable gate array (FPGA) devices, application specific system processors (ASSPs), application specific integrated circuit (ASIC) processors, and/or other types of processors.

Processing circuitry 24 may run (e.g., execute) a network device operating system and/or other software (including firmware) that is stored on memory circuitry 26 communicatively coupled to processing circuitry 24. Memory circuitry 26 may include one or more non-transitory (tangible) computer-readable storage media that store the operating system software and/or any other software code, sometimes referred to as program instructions, software, data, instructions, or code. As an example, at least some of the operations described herein in connection with handling group-external control plane traffic may be stored as (software) instructions on the one or more non-transitory computer-readable storage media (e.g., in portion(s) of memory circuitry 26). The corresponding processing circuitry (e.g., one or more processors of processing circuitry 24) may execute the respective instructions to perform the corresponding operations. Memory circuitry 26 may include non-volatile memory device(s) (e.g., solid-state drives, flash memories or other electrically-programmable read-only memories, hard disk drive storage devices, etc.), volatile memory device(s) (e.g., static or dynamic random-access memories), and/or other storage circuitry. Processing circuitry 24 and memory circuitry 26 (e.g., at least some portions of both) as described above may collectively form control circuitry 22 (e.g., implementing a control plane of network device 10). Accordingly, processing circuitry 24 may sometimes be referred to as control plane processing circuitry or one or more control plane processors.

In illustrative configurations sometimes described herein as an example, processing circuitry 24 when implemented in a supervisor network device 10A (FIG. 1) may execute network device control plane software (e.g., control plane processes) such as operating system software, routing policy management software, routing protocol agents or processes, routing information base agents, and other control software, may be used to support the operation of protocol clients and/or servers, may be used to support the operation of packet processor(s) (e.g., local packet processor(s) and remote packet processor(s) on other network device(s) of aggregation group 12), may store packet forwarding information, may execute packet processing software, and/or may execute other software instructions that control the functions of network devices 10 in aggregation group 12.

Processing circuitry 24 when implemented in worker network device(s) 10B (e.g., network device 10B-1 and 10B-2 in FIG. 1) may execute control plane software that generally offloads the above-mentioned operations to processing circuitry 24 of the supervisor network device 10A and/or otherwise supports the above-mentioned operations performed by processing circuitry 24 of the supervisor network device 10A. In some instances, processing circuitry 24 of worker network devices 10B may perform a subset of above-mentioned (control plane) operations (e.g., operations that rely on local execution on the worker network device 10B).

Packet processor(s) 28 may be used to implement a data plane or forwarding plane of network device 10 and may therefore sometimes be referred to as data plane processing circuitry or data plane processor(s). Packet processor(s) 28 may include one or more processors such as application specific integrated circuit (ASIC) processors, programmable logic devices (e.g., field programmable gate array (FPGA) devices), application specific system processors (ASSPs), central processing units (CPUs), graphics processing units (GPUs), microprocessors, general-purpose processors, host processors, microcontrollers, digital signal processors, and/or other types of processors.

A packet processor 28 may receive incoming network packets via input-output interfaces 32 (and/or via network device internal interfaces such as loopback interfaces), parse and analyze the received network packets, process the packets based on packet forwarding decision data and/or in accordance with network protocol(s) or other traffic policy, and/or forward (or drop) the network packet accordingly.

To appropriately process network traffic (e.g., control plane traffic), each packet processor 28 may operate with packet processor memory circuitry 30. Packet processor 28 and memory circuitry 30 may be integrated as parts of the same integrated circuit die (or integrated circuit die package). If desired, packet processor 28 and memory circuitry 30 may be formed as separate discrete processor and memory components (e.g., as a packet processor integrated circuit die and a memory integrated circuit die). In some illustrative configurations described herein as an example, memory circuitry 30 may include ternary content addressable memories (TCAMs). If desired, entries for network traffic matching may be stored in other types of packet processor memory circuitry in addition to or instead of TCAMs. As desired, memory circuitry 30 may include non-volatile memory device(s) (e.g., solid-state drives, flash memories or other electrically-programmable read-only memories, hard disk drive storage devices, etc.), volatile memory device(s) (e.g., static or dynamic random-access memories), and/or other storage circuitry.

To interact with external devices, external systems, and/or users, network device 10 may include input-output interfaces 32 formed using corresponding input-output devices (sometimes referred to as input-output circuitry or interface circuitry). As an example, some input-output interfaces 32 (e.g., those based on wired communication) may be implemented on physical ports. These physical ports may be configured to physically couple to and/or electrically connect to corresponding mating connectors of external components or equipment (e.g., cables, pluggable optical transceiver modules, etc.). Different ports may have different form-factors to accommodate different cables, different modules, different devices, or generally different external equipment. As another example, some input-output interfaces 32 (e.g., those based on wireless communication) may be implemented using wireless communications circuitry (e.g., antennas, transceivers, radios, etc.).

In illustrative configurations sometimes described herein as examples, input-output interfaces 32 may include network device aggregation group fabric interface(s) 34 (sometimes referred to as fabric interface(s) 34) and non-network-device-aggregation-group-fabric interface(s) 35 (sometimes referred to as non-fabric interface(s) 35). Internally within device 10, fabric interface(s) 34 and non-fabric interface(s) 35 may each be communicatively coupled to at least one packet processor 28 that processes the traffic for interfaces 34 and 35.

Outside of device 10, fabric interface(s) 34 may be communicatively coupled to (fabric interface(s) 34 of) other members of aggregation group 12 via corresponding links 11 (e.g., formed using cabling) and may therefore be configured to communicate within aggregation group 12 (e.g., facilitate communication with other members of aggregation group 12). Non-fabric interface(s) 35 may be communicatively coupled to interfaces of devices external to aggregation group 12 (e.g., devices 14 and/or hosts 16), and if desired, to (non-fabric interface(s) 35 of) other members of aggregation group 12. Accordingly, non-fabric interface(s) 35 may be configured to communicate outside of aggregation group 12 (e.g., facilitate communication with devices external to aggregation group 12 or at least outside of the context of aggregation group 12 when communicatively coupled members of group 12).

In some illustrative configurations sometimes described herein as an example, non-fabric interface(s) 35 may include Ethernet interfaces (e.g., formed on front-panel ports) of device 10. Accordingly, non-fabric interface(s) 35 (e.g., when implemented using Ethernet interfaces) may convey (e.g., transmit and/or receive) Ethernet frames having Ethernet frame headers (e.g., thereby forming a part of an Ethernet network). In some illustrative configurations sometimes described herein as an example, fabric interface(s) 34 (e.g., formed on fabric ports such as backplane ports) do not form a part of the Ethernet network. In particular, fabric interface(s) 34 may be configured to implement other types of protocols, such as a port stacking tunneling protocol, to convey traffic. More specifically, fabric interface(s) 34 (e.g., when implemented with a port stacking tunneling protocol) may convey (e.g., transmit and/or receive) traffic (e.g., packets) carrying a tunneling header in accordance with or generally based on the port stacking tunneling protocol. The inclusion of the tunneling header (e.g., information therein) may help other members of aggregation group 12 receiving the traffic to appropriately and more efficiently process (e.g., forward) the traffic within aggregation group 12 (e.g., carried over fabric links 11 and fabric interfaces 34). Accordingly, fabric interface(s) 34 may sometimes be referred to as forming a tunneling protocol control network (e.g., using tunneling header information as traffic control information instead of Ethernet header information, as for the Ethernet network formed using interface(s) 35).

These examples of interfaces 32 are merely illustrative. If desired, interfaces 32 may include any suitable set of communication interfaces for connecting device 10 to the Internet, local area network(s), wide area network(s), WLAN network(s), generally network device(s) in these networks and in other networks, and/or other computing equipment (e.g., end hosts, server equipment, administrator devices, etc.).

The components of network device 10 described in connection with FIG. 2 are merely illustrative. If desired, network device 10 may include any other suitable components. As examples, device 10 may include power management and/or supply circuitry and may include a system bus and/or other signal paths that communicatively couple the components of network device 10 to one another, that provide the components of network device 10 with power from the power management and/or supply circuitry, etc. In general, each component of network device 10 may be communicatively coupled to control circuitry 22 (e.g., processing circuitry 24 and/or memory circuitry 26) via one or more signal paths that enable the reception and transmission of control signals, data, and/or other information therebetween.

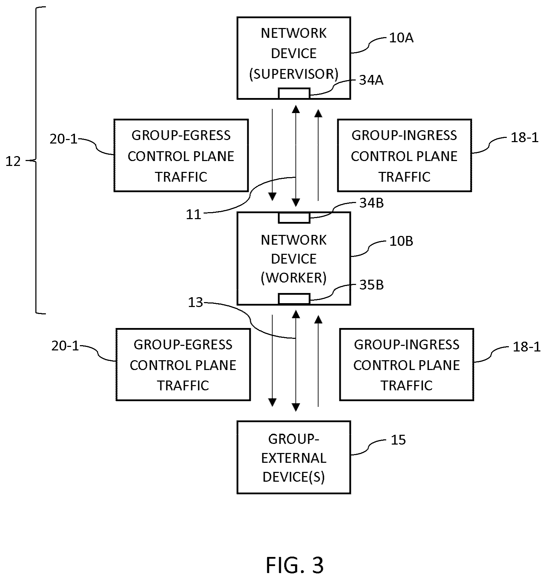

One illustrative type of traffic handled by members of aggregation group 12 can include control plane traffic between a member network device 10 of aggregation group 12 and an external device external to aggregation group 12 (sometimes referred to as a group-external device). FIG. 3 is a diagram showing illustrative control plane traffic between a member of aggregation group 12 and group-external device(s) 15. This type of control plane traffic may sometimes be referred to as a group-external control plane traffic.

In some illustrative configurations sometimes described herein as an example, aggregation group 12 may include a first network device, such as a supervisor network device 10A, configured to execute control plane process(es) for other network device(s), such as worker network device 10B. Accordingly, this can involve the first network device handling group-external control plane traffic for a remote network device interface (e.g., a non-fabric interface 35 of worker network device 10B). If care is not taken, this type of group-external control plane traffic may not be appropriately (e.g., timely) handled by members of a network device aggregation group. For example, if care is not taken, a supervisor network device that executes the control plane process(es) for worker network devices may be unable to receive and/or process this type of group-external control plane traffic entering the aggregation group at the worker network devices in a timely and appropriate manner).

In the example of FIG. 3, two illustrative types of group-external control plane traffic are shown as examples. As a first example, worker network device 10B may be configured to receive ingress control plane traffic 18-1 for (e.g., on behalf of) aggregation group 12 from one or more group-external devices 15 (e.g., network devices 14 and/or hosts 16 in FIG. 1) using (e.g., via) corresponding non-fabric interface(s) 35B of device 10B (e.g., interface(s) 35 of FIG. 2 when implemented in device 10B) and over non-fabric link(s) 13. Because network device 10B may not be configured to perform (or may be configured to selectively not perform) local control plane processing of traffic 18-1, network device 10B may subsequently provide (e.g., transmit) the received group-ingress control plane traffic 18-1 using fabric interface(s) 34B of device 10B (e.g., interface(s) 34 of FIG. 2 when implemented in device 10B) and over fabric link(s) 11 to corresponding fabric interface(s) 34A of device 10A (e.g., interface(s) 34 of FIG. 2 when implemented in device 10A). The corresponding control plane process(es) executing on device 10A may appropriately perform control plane processing of traffic 18-1 originally received (as ingress traffic of group 12) via remote non-fabric interface(s) 35B of remote device 10B.

As a second example, because network device 10B may not be configured to perform (or may be configured to selectively not perform) at least certain local control plane operations, control plane process(es) executing on network device 10A may generate corresponding group-egress control plane traffic 20-1 for (e.g., on behalf of) aggregation group 12 to be transmitted using non-fabric interface(s) 35B of network device 10B. In other words, the generated traffic 20-1 may be provided to remote device 10B for group-egress via non-fabric interface(s) 35. Accordingly, network device 10A may be configured to convey group-egress control plane traffic 20-1 using fabric interface(s) 34A and over link(s) 11 to corresponding fabric interface(s) 34B of device 10B. Device 10B may further provide traffic 20-1 (as egress traffic for aggregation group 12) using non-fabric interface(s) 35B and over link(s) 13 to external device(s) 15.

While two illustrative aggregation group member network devices 10 are shown in the example of FIG. 3, this is merely illustrative. In some aggregation group configurations, one or more intervening network devices 10 (e.g., additional worker network device(s) 10B) may be present between device 10A and device 10B. These intervening network device(s) 10 may forward traffic 18-1 and 20-1 using their corresponding fabric interfaces 34 and additional fabric links 11 to provide the communicative coupling of devices 10A and 10B shown in FIG. 3.

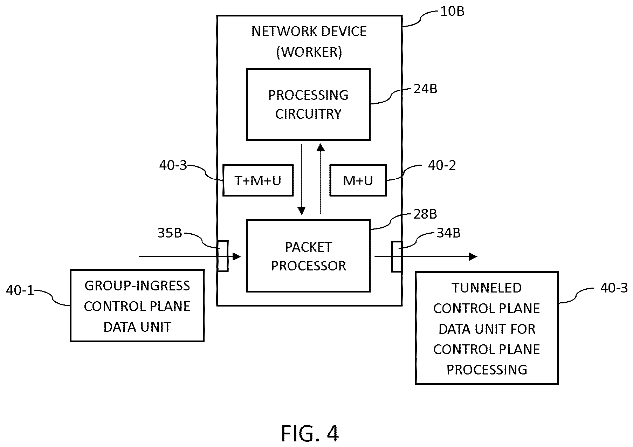

FIGS. 4-8 show illustrative details for handling group-ingress control plane traffic. In particular, FIG. 4 is a diagram of an illustrative network device, such as a worker network device 10B in aggregation group 12, configured to receive, as ingress traffic for aggregation group 12, a group-ingress control plane data unit 40-1 using the aggregation group-exterior facing (non-fabric) interface 35B. A packet processor 28B of device 10B (e.g., packet processor 28 of FIG. 2 when implemented in device 10B) may be communicatively coupled to interface 35B and may receive and process data unit 40-1. In some illustrative configurations sometimes described herein as an example, data unit 40-1 may be an Ethernet frame (e.g., having Ethernet header information as the traffic control information).

As part of the data plane processing of data unit 40-1, packet processor 28B may generate traffic processing metadata (sometimes referred to as packet processing metadata) that includes information indicative of how (e.g., the context in which) data unit 40-1 was received, information indicative of how (e.g., the context in which) data unit 40-1 is to be processed based on how data unit 40-1 was received, and/or other metadata information to facilitate appropriate processing of control plane data unit 40-1 by control plane processing circuitry. As an illustrative example, packet processor 28B may be configured to generate the metadata information (e.g., information identifying an ingress virtual local area network (VLAN) or generally an ingress context of data unit 40-1, identifying tables or other databases for processing data units 40-1, etc.) based on ingress interface 35B, or more specifically based on lookup operation(s) using the header information and/or ingress interface information.

As part of the data plane processing of data unit 40-1, packet processor 28B may further identify, based on the header information of data unit 40-1, data unit 40-1 as a control plane data unit to be processed in the control plane (e.g., by control plane processing circuitry). Accordingly, packet processor 28B may provide a modified (e.g., supplemented) version of the received control plane data unit 40-1 (sometimes referred to herein as a control plane data unit 40-2 for control plane processing) to processing circuitry 24B of device 10B (e.g., processing circuitry 24 of FIG. 2 when implemented in device 10B) for further processing.

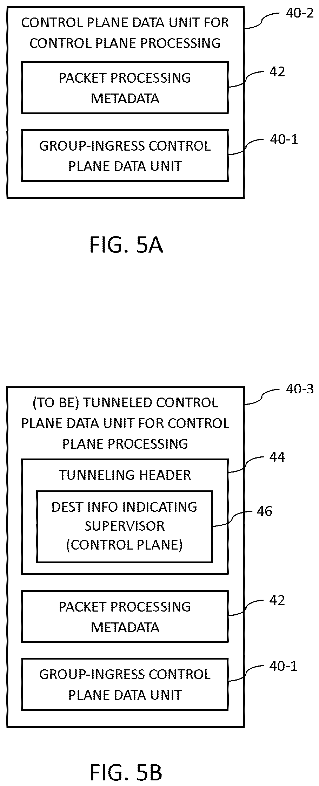

As shown in FIG. 5A, control plane data unit 40-2 for control plane processing may include and/or otherwise identify packet processing metadata 42 generated by worker packet processor 28B and the originally received group-ingress control plane data unit 40-1. In one illustrative arrangement, metadata 42 may be prepended to and/or otherwise associated with control plane data unit 40-1 as part of control plane data unit 40-2 for control plane processing.

Network device 10B may not be configured to locally perform control plane processing for data unit 40-1, or in other illustrative scenarios, may selectively defer control plane processing for data unit 40-1 to another member of aggregation group 12. Accordingly, network device 10B may facilitate transport of control plane data unit 40-2 for remote control plane processing (e.g., by control plane processing circuitry of a supervisor network device 10A).

As shown in the example of FIG. 4, based on receiving control plane data unit 40-2 for control plane processing, processing circuitry 24B may provide a further modified (e.g., supplemented) version of the received control plane data unit 40-1 (or more specifically, a modified version of received control plane data unit 40-2 for control plane processing) back to packet processor 28, or a different packet processor (e.g., via an internal device interface such as a loopback interface). In particular, processing circuitry 24B may generate the further modified version of received control plane data unit 40-2 by encapsulating data unit 40-2 with a tunneling header (e.g., by populating tunneling header fields with corresponding values). This further modified version of the control plane data unit may sometimes be referred to as a (to be) tunneled control plane data unit 40-3 for (remote) control plane processing.

As shown in FIG. 5B, tunneled control plane data unit 40-3 for control plane processing may include and/or otherwise identify a tunneling header 44, packet processing metadata 42 generated by worker packet processor 28B, and the originally received group-ingress control plane data unit 40-1. Tunneling header 44 may include, among other information, (tunnel) destination information 46 identifying or otherwise indicating a destination to which data unit 40-3 should be tunneled. In some illustrative configurations described herein as an example, an active supervisor network device 10A may be configured to perform control plane processing for all group-external control plane data units. In this example, destination information 46 may identify supervisor network device 10A and/or control plane processing circuitry of device 10A (e.g., using an interface associated with control plane processing circuitry of device 10A). Tunneling header 44 may also identify or otherwise indicate worker device 10B as the aggregation group ingress member and/or fabric interface 34B of device 10B as the aggregation group fabric ingress interface (e.g., the ingress interface of the tunnel).

In one illustrative arrangement, metadata 42 may be prepended to control plane data unit 40-1, thereby encapsulating the original control plane data unit 40-1, and tunneling header 44 may further be prepended to metadata 42 and control plane data unit 40-1, thereby further encapsulating metadata 42 and control plane data unit 40-1 for transport (e.g., tunneling) across the aggregation group fabric (e.g., formed using fabric interfaces 34 and links 11).

Configurations in which tunneling header 44, and more generally tunneling headers of traffic conveyed using fabric interfaces 34 and over fabric links 11, are based on a port stacking tunneling protocol (e.g., has header fields and values in accordance with or otherwise compatible with the port stacking tunneling protocol) are sometimes described herein as an example. If desired, other types of tunneling headers (e.g., based on other tunneling protocols) may be used for conveying traffic using fabric interfaces 34 and over fabric links 11.

Referring back to FIG. 4, after receiving data unit 40-3 for tunneling from processing circuitry 24B, packet processor 28B may provide (e.g., transmit) tunneling header-encapsulated group-ingress control plane data unit 40-3 using fabric interface 34B, communicatively coupled to packet processor 28B, for transport to supervisor network device 10A communicatively coupled to fabric interface 34B.

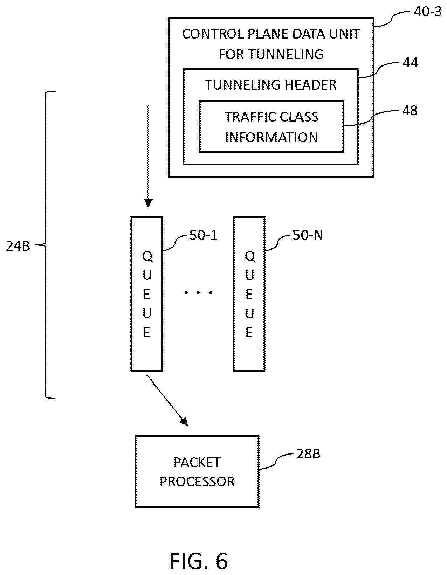

If desired, control plane data unit 40-3 for tunneling may be provided with traffic class information that indicates traffic priority (e.g., traffic processing priority, traffic forwarding priority, etc.) of data unit 40-3 relative to other types of traffic conveyed in the aggregation group fabric (e.g., relative to other types of group-egress control plane data units, relative to other types of control plane data units such as group-internal control plane data units, and/or relative to data plane data units). As shown in FIG. 6, control plane data unit 40-3 may be generated by processing circuitry 24B to contain traffic class information 48 in tunneling header 44. For example, tunneling header 44 may include a traffic class header field containing traffic class information 48 (e.g., a numeric value corresponding to one of a plurality of traffic classes).

In the example of FIG. 6, processing circuitry 24B may include N number of queues 50, e.g., queues 50-1, . . ., 50-N, of different priorities. In one illustrative configuration, queues 50 may be loopback queues configured to provide group-external control plane data units added to queues 50 to loopback interface(s) configured to inject the control plane data units into packet processor 28B communicatively coupled to the loopback interfaces. Depending on traffic class information in corresponding tunneling headers of different types of group-ingress control plane data units, processing circuitry 24 may provide the different types of tunneling-header encapsulated control plane data units to different queues 50.

As one example, tunneling-header encapsulated control plane data unit 40-3 may include traffic class information 48 indicating a first priority (e.g., a higher or highest priority traffic class amongst priority classes for group-external control plane traffic) and may be added by processing circuitry 24B to a higher-priority (or highest-priority) traffic queue 50-1 for group-external control plane traffic. As another example, another tunneling-header encapsulated control plane data unit may include traffic class information indicating a second priority (e.g., a lower priority than the first priority indicated by information 48, a lowest priority traffic class amongst priority classes for group-external control plane traffic, etc.) and may be added by processing circuitry 24B to a lower-priority (or lowest-priority) queue 50-N for group-external control plane traffic. In general, there may be any number (e.g., three) of traffic classes and any number of priority queues 50 for group-external control plane traffic.

Control plane data units in higher-priority queues 50 may be provided to packet processor 28B prior to control plane data units in lower-priority queues 50. Accordingly, control plane data units in higher-priority queues 50 may be transmitted by packet processor 28B using fabric interface(s) 34B prior to control plane data units in lower-priority queues 50.

In some illustrative configurations sometimes described herein as an example, priority or traffic class is determined based on the control plane protocol for which information is being conveyed by the group-external control plane data units. As a specific illustrative example, group-ingress control plane data units that are bridging protocol data units (or generally for data link management) may be encapsulated with tunneling header information indicative of a higher-priority traffic class, while group-ingress control plane data units that for network layer control protocols (or routing protocols) such as a border gateway protocol may be encapsulated with tunneling header information indicative of a lower-priority traffic class. This example is merely illustrative. If desired, different group-external control plane data units may be prioritized based on other characteristics.

While in illustrative configurations described in connection with FIGS. 4-6 the tunneling of control plane data unit 40-2 is performed by processing circuitry 24B, this is merely illustrative. If desired, packet processor 28B and/or other processing circuitry (e.g., other than processor 28B and processing circuitry 24B) may be configured to generate the tunneled control plane data unit 40-3 for transmission using interface 34B (e.g., by performing the operations described to be performed by processing circuitry 24B in connection with FIGS. 4-6 for providing tunneled data unit 40-3).

Tunneled control plane data unit 40-3 transmitted by network device 10B in FIG. 4 for remote control plane processing may be received by another network device 10 in aggregation group 12 such as a supervisor network device 10A of aggregation group 12 configured to perform the control plane processing. In some illustrative aggregation group configurations, tunneled control plane data unit 40-3 may be forwarded by any number of intervening network devices 10 in aggregation group 12 before reaching the network device configured to perform the control plane processing. The intervening network device(s) 10 may forward the tunneled control plane data unit 40-3 towards the network device configured to perform the control plane processing based on tunneling header 44 (e.g., destination information 46 and/or other information therein). In other illustrative configurations, there may be no intervening network devices 10.

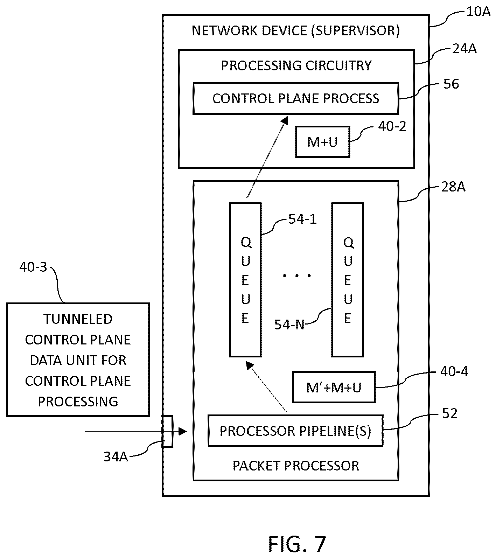

FIG. 7 is a diagram of an illustrative network device, such as supervisor network device 10A in aggregation group 12, configured to receive tunneled control plane data unit 40-3 generated by network device 10B in FIG. 4 using (e.g., via) the fabric interface 34A. A packet processor 28A of device 10A (e.g., packet processor 28 of FIG. 2 when implemented in device 10A) may be communicatively coupled to interface 34A and receive and process tunneled data unit 40-3 (e.g., to forward the (tunneled) group-ingress data traffic to processing circuitry 24A).

As part of the data plane processing of tunneled data unit 40-3, packet processor 28A (e.g., processor pipeline(s) 52 therein) may identify, based on tunneling header information 44 in data unit 40-3 (e.g., destination information 46 and/or traffic class information 48 therein), that tunneled data unit 40-3 is a group-external (or more specifically group-ingress) control plane data unit to be processed in the control plane. As part of the data plane processing of tunneled data unit 40-3, supervisor packet processor 28A (e.g., processor pipeline(s) 52 therein) may generate additional traffic processing metadata that includes information indicative of how (e.g., the context in which) data unit 40-3 was received, information indicative of how (e.g., the context in which) data unit 40-3 is to be processed based on how data unit 40-3 was received, and/or other metadata information to facilitate appropriate processing of control plane data unit 40-3 by control plane processing circuitry. Accordingly, packet processor 28A (e.g., processor pipeline(s) 52 therein) may provide a modified (e.g., supplemented) version of the received control plane data unit 40-3 (sometimes referred to herein as a control plane data unit 40-4 for control plane processing) to processing circuitry 24A of device 10A (e.g., processing circuitry 24 of FIG. 2 when implemented in device 10A) for further processing.

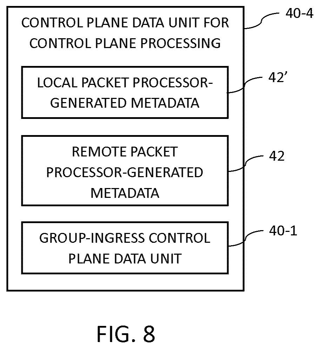

As shown in FIG. 8, control plane data unit 40-4 for control plane processing may include and/or otherwise identify local (supervisor) packet processor-generated metadata 42' (e.g., generated by a processor ingress pipeline 52 of packet processor 28A), remote (worker) packet processor-generated metadata 42 (e.g., generated by a process ingress pipeline of packet processor 28B in FIG. 4), and the originally received group-ingress control plane data unit 40-1. While not explicitly shown in the example of FIG. 8, tunneling header 44 may be considered part of metadata 42' or otherwise included in data unit 40-4. In one illustrative arrangement, metadata 42 may be prepended to or otherwise associated with control plane data unit 40-1, and metadata 42' may further be prepended to or otherwise associated with metadata 42 and control plane data unit 40-1, thereby facilitating control plane processing of data unit 40-1 therein.

Referring back to FIG. 7, packet processor 28A (e.g., pipeline 52) may also (e.g., as part of identifying data unit 40-3 as containing a group-ingress control plane data unit) determine a traffic class (e.g., control plane processing priority) of data unit 40-3 based on traffic class information 48 in header 44 of data unit 40-3. Based on the determined traffic class (e.g., control plane processing priority) of data unit 40-3, processing circuitry 28A may provide data unit 40-4 (e.g., data unit 40-3 with accompanying locally-generated metadata 42') to a corresponding control plane queue 54.

As shown in FIG. 7 there may be any suitable number of control plane queues 54 (e.g., queue 54-1, ..., 54-N) for group-ingress control plane traffic intended to reach control plane processing circuitry 24A. If desired, there may be a single control plane queue 54 for group-ingress control plane traffic. Each group-ingress control plane traffic class may be mapped to a corresponding queue 54, or if desired, multiple group-ingress control plane traffic classes may be mapped to a same queue 54.

As one illustrative example, tunneling header 44 of data unit 40-3 may include traffic class information 48 indicating a first priority (e.g., a higher or highest priority traffic class amongst priority classes for group-external control plane traffic) and may be added by packet processor 28A (e.g., pipeline 52) to a higher-priority (or highest-priority) control plane queue 54-1 for group-ingress control plane traffic. As another example, another tunneling header of another group-ingress control plane data unit may include traffic class information indicating a second priority (e.g., a lower priority than the first priority indicated by information 48, a lowest priority traffic class amongst priority classes for group-external control plane traffic, etc.) and may be added by packet processor 28A (e.g., pipeline 42) to a lower-priority (or lowest-priority) queue 54-N for group-external control plane traffic. In general, there may be any number (e.g., three) of traffic classes and any number of control plane queues 54 for group-external control plane traffic.

In most cases, control plane data units in higher-priority queues 54 may be provided to control plane processing circuitry 24A prior to control plane data units in lower-priority queues 54. Accordingly, control plane data units in higher-priority queues 54 may be processed by control plane process(es) executing on processing circuitry 24A prior to control plane data units in lower-priority queues 54.

In the example of FIG. 7, processing circuitry 24A may obtain, e.g., from queue 54-1, the original group-ingress control plane data unit 40-1, along with remote worker device-generated metadata 42 and locally generated metadata 42' (e.g., as parts of control plane data unit 40-4). Processing circuitry 24A may determine that control plane data unit 40-4 contains a group-ingress control plane data unit conveyed (e.g., received) via a remote device interface (e.g., non-fabric interface 35B in FIG. 4). As examples, processing circuitry 24A may make this determination based on header information of data unit 40-4, based on receiving data unit 40-4 from one of queues 54 (e.g., dedicated for remote-device group-ingress control plane data units), based on the presence of metadata 42' and metadata 42, and/or based on other indications.

In one illustrative configuration, metadata 42' may include traffic class or priority information (e.g., information 48 in FIG. 6), may indicate the presence of remote-device generated metadata 42 in the same data unit 40-4, may identify data unit 40-4 as containing (e.g., being) a group-ingress control plane data unit, and/or may include other information to facilitate appropriate processing of data unit 40-4. Accordingly, processing circuitry 24A may use metadata 42' to identify metadata 42 as the relevant metadata for performing control plane processing of data unit 40-1.

Based on determining that control plane data unit 40-4 is a group-ingress control plane data unit conveyed via a remote device interface, processing circuitry 24A may use remote device-generated metadata 42 to process control plane data unit 40-1 and may disregard metadata 42' when performing control plane processing of control plane data unit 40-1. In particular, processing circuitry 24A may execute an illustrative control plane process 56 (e.g., a BGP process, an IGP process, an STP process, an ARP process, an IS-IS protocol process, a PIM protocol process, or another control plane process) configured to perform control plane processing of the original group-ingress control plane data unit 40-1 (e.g., a BGP message, an IGP message, an STP message, an ARP message, an IS-IS protocol message, a PIM protocol message, etc.) using metadata 42, thereby providing data unit 40-2 for control plane processing at control plane processing circuitry 24A of supervisor device 10A.

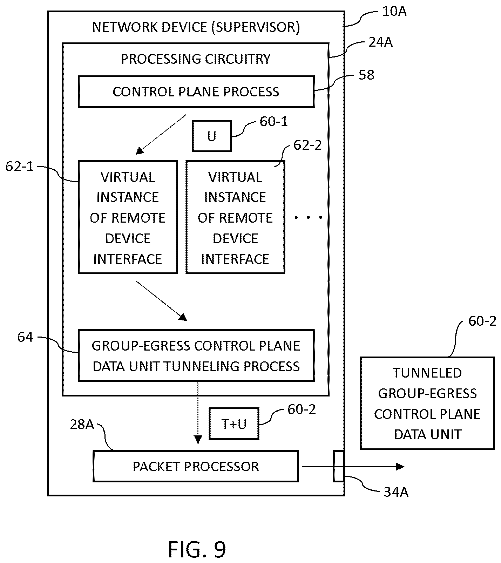

FIGS. 9-11 show illustrative details for handling group-egress control plane traffic. In particular, FIG. 9 is a diagram of an illustrative network device, such as supervisor network device 10A in aggregation group 12 (e.g., the same device 10A as in FIG. 7), configured to provide (e.g., generate), as egress traffic for aggregation group 12, a group-egress control plane data unit 60-1 for egress at a remote device interface. In particular, data unit 60-1 may be generated as part of the execution of a control plane process 58 (e.g., the same control plane process as control plane process 56 or a different control plane process), such as a BGP process, an IGP process, an STP process, an ARP process, an IS-IS protocol process, a PIM protocol process, or another control plane process. In some illustrative configurations sometimes described herein as an example, data unit 60-1 may be an Ethernet frame (e.g., having Ethernet header information as the traffic control information).

To facilitate transport of group-egress control plane traffic to remote worker network devices for group-egress at remote device interfaces (e.g., non-fabric interfaces 35B of remote worker devices 10B), processing circuitry 24A may maintain virtual instances 62 (e.g., representations) of the remote devices interfaces, such as a first virtual instance 62-1 of a first remote device interface (e.g., a non-fabric interface 35B at a remote worker device 10B), a second virtual instance 62-2 of a second remote device interface (e.g., an additional non-fabric interface 35B at the same remote worker device 10B or an additional non-fabric interface 35B at a different remote worker device 10B), etc. If desired, processing circuitry 24A may maintain a virtual instance 62 for each non-fabric interface 35B at every remote network device 10 of aggregation group 12.

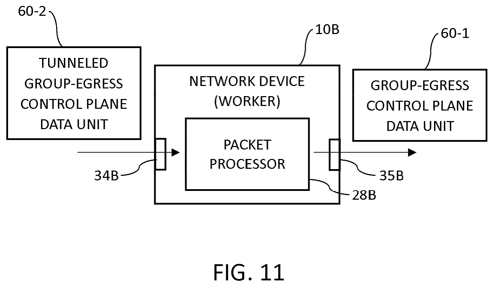

Accordingly, to appropriately transport the generated group-egress control plane data units, processing circuitry 24A may provide each group-egress control plane data unit to the corresponding virtual instance of the remote device interface at which the control plane data unit should egress. In the example of FIG. 9, processing circuitry 24A when executing process 58 may generate control plane data unit 60-1 and provide the generated data unit 60-1 to virtual instance 62-1 corresponding to the intended remote device interface for group-egress (e.g., non-fabric interface 35B in FIG. 11).

Based on the corresponding instance 62-1 to which group-egress control plane data unit 60-1 is provided, processing circuitry 24A (e.g., when executing a group-egress control plane data unit tunneling process 64) may encapsulate control plane data unit 60-1 with the appropriate tunneling header (e.g., based on a port stacking tunneling protocol), thereby providing a (to be) tunneled control plane data unit 60-2, for transport in the aggregation group fabric. In particular, for each instance 62, corresponding remote device information and remote device interface information may also be maintained (e.g., stored) by processing circuitry 24A (e.g., on memory circuitry 26 of device 10A). Accordingly, processing circuitry 24A may obtain the corresponding remote device information and remote device interface information based on instance 62-1 being used to generate control plane data unit 60-2 for tunneling.

While described above in connection with FIG. 9 as being used to facilitate transport of group-egress control plane traffic to remote worker network devices for group-egress at remote device interfaces, virtual instances 62 of remote device interfaces may also be used for other purposes such as to facilitate the reception of group-ingress traffic (e.g., control plane traffic) tunneled from the remote device interfaces to processing circuitry 24A. In general, virtual instances 62 of remote device interfaces may be used by processing circuitry 24A to facilitate ease of management of any traffic flows to and/or from remote device interfaces.

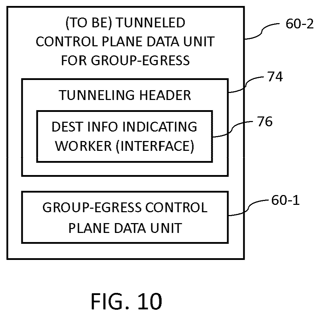

As shown in FIG. 10, tunneled control plane data unit 60-2 may include and/or otherwise identify a tunneling header 74 and the generated group-egress control plane data unit 60-1. Tunneling header 74 may include, among other information, (tunnel) destination information 76 identifying or otherwise indicating a destination to which data unit 60-2 should be tunneled. In some illustrative configurations in which data unit 60-2 is destined for a non-fabric interface 35B of a worker network device 10B, destination information 76 may identify worker network device 10B and/or non-fabric interface 35B of device 10B. Tunneling header 44 may also identify or otherwise indicate supervisor device 10A as the aggregation group ingress member and/or fabric interface 34A of device 10A as the aggregation group fabric ingress interface (e.g., the ingress interface of the tunnel).

Referring back to FIG. 9, packet processor 28A may obtain, from processing circuity 24A, control plane data unit 60-2 for tunneling. Subsequently, packet processor 28 may forward (e.g., transmit) the control plane data unit 60-2 for tunneling using (e.g., via) fabric interface 34A of device 10A and over fabric link(s) 11 to a corresponding fabric interface 34B of a worker device 10B (e.g., the remote device having an interface at which data unit 60-1 should be transmitted as group-egress traffic).

While not explicitly shown in FIG. 10, tunneling header 74 may also include traffic class information (e.g., the same set of traffic classes or priorities as those for group-ingress control plane traffic, or a different set of traffic classes or priorities). As similarly described in connection with FIGS. 6 and 7, the traffic class (e.g., indicating forwarding priority, processing priority, etc.) for group-egress control plane traffic may similarly be based on the type of control plane traffic (e.g., the type of control plane process that generated the control plane traffic).

As similarly described in connection with tunneled group-ingress traffic, in some illustrative aggregation group configurations, tunneled group-egress control plane data unit 60-2 may be forwarded by any number of intervening network devices 10 in aggregation group 12 before reaching the final network device configured to transmit data unit 60-1 in data unit 60-2 as group-egress traffic. The intervening network device(s) 10 may forward the tunneled control plane data unit 60-2 towards the final network device based on tunneling header 74 (e.g., destination information 76 and/or other information therein). In other illustrative configurations, there may be no intervening network devices 10.

FIG. 11 is a diagram of an illustrative network device, such as worker network device 10B in aggregation group 12 (e.g., the same worker device as in FIG. 4 or a different worker device in aggregation group 12), configured to receive tunneled control plane data unit 60-2 generated by network device 10A in FIG. 9 using (e.g., via) the fabric interface 34B. A packet processor 28B of device 10B may be communicatively coupled to interface 34B and receive and process tunneled data unit 60-2.

As part of the data plane processing of tunneled data unit 60-2, packet processor 28B may identify, based on tunneling header information 74 in data unit 60-2 (e.g., destination information 76 and/or traffic class information therein), that tunneled data unit 60-2 is a group-egress control plane data unit to be transmitted as group-egress traffic at interface 35B. Based on this determination, packet processor 28B may remove header information 74 and transmit the original (control plane process-generated) control plane data unit 60-1 using (e.g., via) non-fabric interface 35B (e.g., to an intended external device 15 in FIG. 3 over a non-fabric link 13).

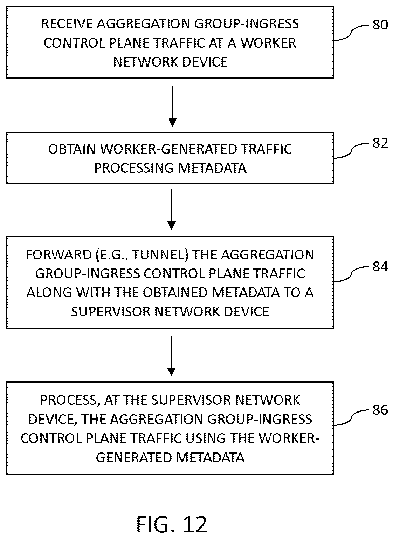

FIG. 12 is a flowchart of illustrative operations for handling aggregation group-ingress control plane traffic received at remote network interfaces (e.g., remote from the perspective of a device performing control plane processing of the group-ingress control plane traffic). In particular, these operations may be performed by one or more processors of network devices 10 (FIG. 2), such as one or more processors 24A and/or 28A of supervisor device 10A and/or one or more processors 24B and/or 28B of worker device 10B, using other components of network devices 10 (e.g., other components of devices 10A and 10B, such as memory circuitry 26, interfaces 32 including fabric interfaces 34 and non-fabric interfaces 35, etc.). If desired, in other illustrative configurations, these operations of FIG. 12 may be performed in other manners and/or by other computing equipment.

At block 80, one or more processors of a worker network device in a network device aggregation group may receive aggregation group-ingress control plane traffic (e.g., via a non-fabric interface configured to communicate outside of the aggregation group). As an example, the operations performed at block 80 may include operations described in connection with FIG. 4 for receiving control plane data unit 40-1.

At block 82, the one or more processors of the worker network device (e.g., a packet processor) may obtain traffic processing metadata (e.g., when processing the received group-ingress control plane traffic). As an example, the operations performed at block 82 may include operations described in connection with FIGS. 4 and 5A for performing data plane processing of control plane data unit 40-1 and generating metadata 42 to obtain control plane data unit 40-2 for control plane processing.

At block 84, the one or more processors of the worker network device may forward (e.g., tunnel), to a supervisor network device in the aggregation group, the aggregation group-ingress control plane traffic along with the metadata (obtained at block 82). As an example, the operations performed at block 84 may include operations described in connection with FIGS. 4, 5B, and 6 for encapsulating control plane data unit 40-2 with a tunneling header (e.g., having destination information, traffic class information, etc.) to obtain control plane data unit 40-3 and for transmitting control plane data unit 40-3.

At block 86, one or more processors of the supervisor network device may (receive and) process the aggregation group-ingress control plane traffic using the worker-generated metadata. As an example, the operations performed at block 86 may include operations described in connection with FIGS. 7 and 8 for receiving and processing tunneled control plane data unit 40-3 to provide a control plane process with the corresponding control plane data unit 40-2 for processing.

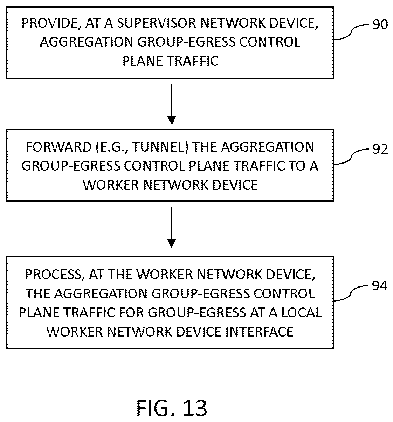

FIG. 13 is a flowchart of illustrative operations for handling aggregation group-egress control plane traffic for transmission at remote network interfaces (e.g., remote from the perspective of a device performing control plane processing to generate group-egress control plane traffic). In particular, these operations may be performed by one or more processors of network devices 10 (FIG. 2), such as one or more processors 24A and/or 28A of supervisor device 10A and/or one or more processors 24B and/or 28B of worker device 10B, using other components of network devices 10 (e.g., other components of devices 10A and 10B, such as memory circuitry 26, interfaces 32 including fabric interfaces 34 and non-fabric interfaces 35, etc.). If desired, in other illustrative configurations, these operations of FIG. 13 may be performed in other manners and/or by other computing equipment.

At block 90, one or more processors of a supervisor network device in a network device aggregation group may provide (e.g., generate) aggregation group-egress control plane traffic. As an example, the operations performed at block 90 may include operations described in connection with FIG. 9 for generating control plane data unit 60-1 (e.g., as part of executing a control plane process).

At block 92, the one or more processors of the supervisor network device may forward (e.g., tunnel) the aggregation group-egress control plane traffic to a worker network device in the aggregation group. As an example, the operations performed at block 92 may include operations described in connection with FIGS. 9 and 10 for encapsulating control plane data unit 60-1 with a tunneling header (e.g., having destination information, traffic class information, etc.) to obtain control plane data unit 60-2 and for transmitting control plane data unit 60-2.

At block 94, one or more processors of the worker network device may process the aggregation group-egress control plane traffic for group-egress (e.g., as group-egress traffic) at a local (non-fabric) interface of the worker network device. As an example, the operations performed at block 94 may include operations described in connection with FIG. 11 for receiving and processing tunneled control plane data unit 60-2 and for transmitting control plane data unit 60-1.

The methods and operations described above in connection with FIGS. 1-13 may be performed by the components of one or more network devices and/or other computing equipment of a network using software (including firmware) and/or hardware. Software code for performing these operations may be stored on one or more non-transitory computer-readable storage media (e.g., tangible computer-readable storage media) on one or more of the components of the network device(s) and/or other computing equipment. The software code may sometimes be referred to as software, data, instructions, program instructions, or code. The one or more non-transitory computer-readable storage media may include drives, non-volatile memory such as non-volatile random-access memory (NVRAM), removable flash drives or other removable media, other types of random-access memory, etc. Software stored on the non-transitory computer readable-storage media may be executed by processing circuitry on one or more of the components of the network device(s) and/or other computing equipment.

In accordance with an embodiment, a network device includes memory circuitry, control plane processing circuitry coupled to the memory circuitry and configured to execute a control plane process, a network device aggregation group fabric interface, and a packet processor coupled to the network device aggregation group fabric interface and the control plane processing circuitry and configured to forward control plane traffic for the control plane process conveyed between a non-fabric interface of a remote network device communicatively coupled to the network device aggregation group fabric interface and the control plane processing circuitry, where the control plane traffic contains traffic class information.

In accordance with another embodiment, the forwarded control plane traffic optionally includes a tunneling header that contains the traffic class information.

In accordance with another embodiment, the tunneling header is optionally based on a port stacking tunneling protocol.

In accordance with another embodiment, the network device and the remote network device are optionally configured to form a network device aggregation group, where the network device is optionally configured as a supervisor for the network device aggregation group, and the remote network device is optionally configured as a worker for the network device aggregation group.

In accordance with another embodiment, the control plane traffic optionally includes an ingress control plane data unit for the network device aggregation group that is received at the non-fabric interface of the remote network device and the packet processor is configured to receive, via the network device aggregation group fabric interface, a version of the ingress control plane data unit that includes a tunneling header and remote-device-generated metadata.

In accordance with another embodiment, the tunneling header of the received version of the ingress control plane data unit optionally includes destination information indicating the control plane processing circuitry of the network device.

In accordance with another embodiment, the tunneling header of the received version of the ingress control plane data unit optionally contains traffic class information and the packet processor is optionally configured to select a given queue, out of a plurality of queues, for providing the control plane processing circuitry with the ingress control plane data unit based on the traffic class information.

In accordance with another embodiment, the control plane processing circuitry is optionally configured to process the ingress control plane data unit using the remote-device-generated metadata.

In accordance with another embodiment, the packet processor is optionally configured to obtain locally-generated metadata and the control plane processing circuitry is optionally configured to identify, based on the locally-generated metadata, the remote-device-generated metadata used to process the ingress control plane data unit.

In accordance with another embodiment, the control plane traffic optionally includes an egress control plane data unit for the network device aggregation group for transmission at the non-fabric interface of the remote network device and the packet processor is optionally configured to transmit, via the network device aggregation group fabric interface, a version of the egress control plane data unit that contains a tunneling header.

In accordance with another embodiment, the tunneling header of the version of the egress control plane data unit optionally includes destination information indicating the non-fabric interface of the remote network device.

In accordance with another embodiment, the control plane process executed by the control plane processing circuitry is optionally configured to generate the egress control plane data unit and the control plane processing circuitry is optionally configured to encapsulate the egress control plane data unit with the tunneling header and provide the version of the egress control plane data unit containing the tunneling header to the packet processor.

In accordance with an embodiment, a network device operable in a network device aggregation group, the network device includes a first interface configured to communicate within the network device aggregation group, a second interface configured to communicate outside of the network device aggregation group, and a packet processor coupled to the first and second interfaces and configured to receive, using the second interface, a control plane data unit for the network device aggregation group, and transmit, using the first interface, a version of the control plane data unit that contains a tunneling header identifying an additional network device in the network device aggregation group as a destination and that contains traffic-processing metadata generated by the packet processor.

In accordance with another embodiment, the network device optionally includes memory circuitry, and control plane processing circuitry coupled to the memory circuitry and the packet processor, the packet processor is configured to provide the control plane data unit and the traffic-processing metadata to the control plane processing circuitry.

In accordance with another embodiment, the control plane processing circuitry is optionally configured to provide the version of the control plane data unit that contains the tunneling header and the traffic-processing metadata to the packet processor for transmission using the first interface.

In accordance with another embodiment, the tunneling header optionally identifies control plane processing circuitry of the additional network device as the destination.

In accordance with another embodiment, the tunneling header optionally contains traffic class information.

In accordance with another embodiment, the network device is optionally configured as a worker in the network device aggregation group and the additional network device is optionally configured as a supervisor in the network device aggregation group.

In accordance with an embodiment, a network device operable in a network device aggregation group, the network device includes memory circuitry, control plane processing circuitry coupled to the memory circuitry and configured to generate an egress control plane data unit for the network device aggregation group, a network device aggregation group fabric interface, and a packet processor coupled to the control plane processing circuitry and the network device aggregation group fabric interface and configured to transmit, using the network device aggregation group fabric interface, a version of the egress control plane data unit that contains tunneling header information identifying an interface of an additional network device in the network device aggregation group at which the egress control plane data unit exits the network device aggregation group.

In accordance with another embodiment, the interface of the additional network device is optionally a non-fabric interface, where the control plane processing circuitry is optionally configured to maintain a virtual instance of the interface of the additional network device, and the processing circuitry is optionally configured to use the virtual instance to generate the tunneling header information identifying the interface of the additional network device and configured to provide the version of the egress control plane data unit that contains the tunneling header information to the packet processor.

The foregoing is merely illustrative and various modifications can be made to the described embodiments. The foregoing embodiments may be implemented individually or in any combination.

## Claims

1. A network device comprising:
memory circuitry;
control plane processing circuitry coupled to the memory circuitry and configured to execute a control plane process;
a network device aggregation group fabric interface; and
a packet processor coupled to the network device aggregation group fabric interface and the control plane processing circuitry and configured to forward control plane traffic for the control plane process conveyed between a non-fabric interface of a remote network device communicatively coupled to the network device aggregation group fabric interface and the control plane processing circuitry, wherein the control plane traffic contains traffic class information.

2. The network device defined in claim 1, wherein the forwarded control plane traffic includes a tunneling header that contains the traffic class information.

3. The network device defined in claim 2, wherein the tunneling header is based on a port stacking tunneling protocol.

4. The network device defined in any preceding claim, wherein the network device and the remote network device are configured to form a network device aggregation group, wherein the network device is configured as a supervisor for the network device aggregation group, and wherein the remote network device is configured as a worker for the network device aggregation group.

5. The network device defined in claim 4, wherein the control plane traffic comprises an ingress control plane data unit for the network device aggregation group that is received at the non-fabric interface of the remote network device and wherein the packet processor is configured to receive, via the network device aggregation group fabric interface, a version of the ingress control plane data unit that includes a tunneling header and remote-device-generated metadata.

6. The network device defined in claim 5, wherein the tunneling header of the received version of the ingress control plane data unit comprises destination information indicating the control plane processing circuitry of the network device.

7. The network device defined in claim 6, wherein the tunneling header of the received version of the ingress control plane data unit contains traffic class information and wherein the packet processor is configured to select a given queue, out of a plurality of queues, for providing the control plane processing circuitry with the ingress control plane data unit based on the traffic class information.

8. The network device defined in claim 5, wherein the control plane processing circuitry is configured to process the ingress control plane data unit using the remote-device-generated metadata.

9. The network device defined in claim 8, wherein the packet processor is configured to obtain locally-generated metadata and wherein the control plane processing circuitry is configured to identify, based on the locally-generated metadata, the remote-device-generated metadata used to process the ingress control plane data unit.

10. The network device defined in claim 4, wherein the control plane traffic comprises an egress control plane data unit for the network device aggregation group for transmission at the non-fabric interface of the remote network device and wherein the packet processor is configured to transmit, via the network device aggregation group fabric interface, a version of the egress control plane data unit that contains a tunneling header.

11. The network device defined in claim 10, wherein the tunneling header of the version of the egress control plane data unit comprises destination information indicating the non-fabric interface of the remote network device.

12. The network device defined in claim 11, wherein the control plane process executed by the control plane processing circuitry is configured to generate the egress control plane data unit and wherein the control plane processing circuitry is configured to encapsulate the egress control plane data unit with the tunneling header and provide the version of the egress control plane data unit containing the tunneling header to the packet processor.

13. The network device defined in claim 1, wherein the control plane traffic comprises an ingress control plane data unit received by the packet processor and having a header that identifies the network device as a destination and that contains traffic-processing metadata generated by the remote network device.

14. The network device defined in claim 13, wherein the network device and the remote network device are configured to form a network device aggregation group and wherein the ingress control plane data unit received for the network device aggregation group at the non-fabric interface of the remote network device.

15. The network device defined in claim 1, wherein the network device and the remote network device are configured to form a network device aggregation group and wherein the control plane traffic comprises an egress control plane data unit that contains header information identifying the non-fabric interface of the remote network device at which the egress control plane data unit exits the network device aggregation group.
